# EUROPÄISCHE PATENTANMELDUNG

(11) **EP 3 501 796 A1**
(43) Veröffentlichungstag der Anmeldung: **26.06.2019**
(21) Anmeldenummer: 17209595.2
(22) Anmeldetag: 21.12.2017
(51) Int. Cl.: B29C 64/153, B29C 64/264, B29C 64/295, B33Y 10/00, B33Y 30/00, B22F 3/105

(54) **VORRICHTUNG UND VERFAHREN ZUM SCHICHTWEISEN PULVERBASIERTEN HERSTELLEN EINES ERZEUGNISSES**

(71) Anmelder: Technische Universität München, 80333 München (DE)
(72) Erfinder: FISCHER, Stefan, 82377 Penzberg (DE); PAMMER, Sebastian Tobias, 81679 München (DE); LEONHARDT, Stefan, 80797 München (DE); HAERST, Miriam, 80634 München (DE)
(74) Vertreter: Hoefer & Partner Patentanwälte mbB

(57) **Zusammenfassung**

Die Erfindung betrifft eine Vorrichtung und ein Verfahren zum schichtweisen pulverbasierten Herstellen eines Erzeugnisses (45), bei welchen (a) eine oder sukzessiv mehrere Schichten (31, 32, 33) eines pulverförmigen Materials (30) mittelbar oder unmittelbar auf eine Aufbaufläche (21) aufgebracht werden und (b) das pulverförmige Material zumindest eines vordefinierten Teilbereichs einer jeweils aufgebrachten Schicht (31, 32, 33) von einer der Aufbaufläche (21) abgewandten Seite unter Kontakt mit einer Kontaktfläche (12) einer Heizeinheit (60) und durch gesteuertes selektives Heizen der der Kontaktfläche (12) über die Heizeinheit (60) simultan und vor dem Aufbringen gegebenenfalls weiterer vorgesehener Schichten (32, 33) pulverförmigen Materials (30) aufgeschmolzen wird.

## Beschreibung

Die vorliegende Erfindung betrifft eine Vorrichtung und ein Verfahren zum schichtweisen pulverbasierten Herstellen eines Erzeugnisses.

Es sind verschiedenartige Verfahren bekannt, die Erzeugnisse, insbesondere in dreidimensionaler Art, schichtweise aufbauen. Dabei kommen Flüssigkeiten, Schmelzen oder Pulver - entweder als Reinstoffe oder als Gemische - als Ausgangsstoffe in Frage. Herkömmliche pulverbasierte Herstellungsverfahren verwenden üblicherweise Lichtquellen, zum Beispiel Laser, um aufgetragene Pulvermaterialschichten selektiv und räumlich aufgelöst aufzuschmelzen.

Nachteilig ist dabei, dass eine gegebene einzelne Pulverschicht nicht simultan in einem Schritt bearbeitet werden kann; der verwendete Laserstrahl muss in der Regel die gesamte zu bearbeitende Fläche sukzessiv abtasten. Andere Nachteile liegen in der Beschränkung der Materialien; durch den hohen Energieeintrag mit dem Laser leiden die Materialeigenschaften (bspw. Bruchdehnung) von manchen Thermoplasten.

Der Erfindung liegt die Aufgabe zu Grunde, eine Vorrichtung und ein Verfahren zum schichtweisen pulverbasierten Herstellen eines Erzeugnisses anzugeben, welche in der Lage sind, in besonders flexibler Weise auch großflächige Strukturen mit unterschiedlichen Ausgangsmaterialien zu prozessieren.

Die der Erfindung zu Grunde liegende Aufgabe wird durch ein Verfahren und eine Vorrichtung zum schichtweisen pulverbasierten Herstellen eines Erzeugnisses erfindungsgemäß mit den Merkmalen des Anspruchs 1 bzw. des Anspruchs 10 gelöst. Vorteilhafte Weiterbildungen sind Gegenstand der jeweiligen abhängigen Ansprüche.

Gemäß einem ersten Aspekt der vorliegenden Erfindung wird ein Verfahren zum schichtweisen pulverbasierten Herstellen eines Erzeugnisses geschaffen, bei welchem eine oder sukzessiv mehrere Schichten eines pulverförmigen Materials oder Pulvermaterials mittelbar oder unmittelbar auf eine Aufbaufläche aufgebracht werden und das pulverförmige Material zumindest eines vordefinierten Teilbereichs einer jeweils aufgebrachten Schicht von einer der Aufbaufläche abgewandten Seite unter - insbesondere mechanischem - Kontakt mit einer Kontaktfläche einer Heizeinheit und durch gesteuertes selektives Heizen der Kontaktfläche über die Heizeinheit simultan und vor dem Aufbringen gegebenenfalls weiterer vorgesehener Schichten pulverförmigen Materials aufgeschmolzen wird. Durch das gesteuert selektive Heizen kann jede beliebige (laterale) Struktur in einem einzigen Verarbeitungsschritt durch Aufschmelzen des jeweils zu Grunde liegenden pulverförmigen Materials prozessiert werden, wobei auch große Skalen verarbeitbar sind.

Unter einem Kontakt mit einer Kontaktfläche einer Heizeinheit ist vorangehend und nachfolgend auch - aber nicht nur - ein mechanischer Kontakt zu verstehen. Bei bestimmten Ausführungsformen der Erfindung kann es sich dabei alternativ oder zusätzlich um einen thermischen und/oder wärmeleitenden Kontakt handeln, welcher nicht notwendigerweise einer unmittelbaren (mechanischen) Berührung mit einer Kontaktfläche bedarf.

Insbesondere im Hinblick auf eine erste Phase des erfindungsgemäßen Verfahrens weist dieses die Schritte
- Bereitstellen der Aufbaufläche,
- Aufbringen einer ersten Schicht des pulverförmigen Materials direkt und unmittelbar auf die Aufbaufläche,
- Heranführen der Heizeinheit an die erste Schicht von der der Aufbaufläche abgewandten Seite bis zum - insbesondere mechanischen - Kontakt der ersten Schicht mit der Kontaktfläche der Heizeinheit und
- gesteuertes selektives Heizen der Heizeinheit gemäß dem in Bezug auf die erste Schicht vordefinierten korrespondierenden Teilbereich der ersten Schicht und dadurch gesteuertes und selektives Aufschmelzen des pulverförmigen Materials der ersten Schicht in dem jeweiligen Teilbereich
auf.

Auf diese Weise werden eine erste Schicht und ein entsprechender erster Teilbereich auf der Aufbaufläche ausgebildet.

Für gegebenenfalls vorzusehende nachfolgende Schichten weist das erfindungsgemäße Verfahren beispielsweise die weiteren Schritte
- Aufbringen einer weiteren Schicht des pulverförmigen Materials direkt und unmittelbar auf eine zuletzt aufgebrachte und in Bezug auf dortige Teilbereiche aufgeschmolzene Schicht,
- Heranführen der Heizeinheit an die weitere aufgebrachte Schicht von der der Aufbaufläche abgewandten Seite bis zum - insbesondere mechanischen - Kontakt der weiteren aufgebrachten Schicht mit der Kontaktfläche der Heizeinheit und
- gesteuertes selektives Heizen der Heizeinheit gemäß dem in Bezug auf die weitere aufgebrachte Schicht jeweils vordefinierten korrespondierenden Teilbereich der weiteren aufgebrachten Schicht und dadurch gesteuertes und selektives Aufschmelzen des pulverförmigen Materials der weiteren aufgebrachten Schicht in dem jeweiligen Teilbereich auf.

Auf diese Weise werden weitere Schichten auf eine zu Grunde liegende erste Schicht aufgebracht und prozessiert. Dieses Vorgehen wird für so viele Schichten wiederholt, bis eine vorgegebene Gesamtabfolge von Schichten aufgebracht und prozessiert und damit das gewünschte Erzeugnis fertiggestellt ist.

Das Heizen kann erfindungsgemäß durch vielfältige Verfahren bewerkstelligt werden, solange die gesteuerte Selektivität des Heizvorgangs gewährleistet ist.

Bei einer bevorzugten Ausführungsform erfolgt das Heizen durch mechanischen, thermischen und/oder wärmeleitenden Kontakt der Kontaktfläche der Heizeinheit mit der jeweiligen Schicht pulverförmigen Materials und durch entsprechendes gesteuertes selektives Temperieren eines mit dem Teilbereich der jeweiligen Schicht korrespondierenden Teilbereichs der Kontaktfläche, insbesondere durch resistives und/oder induktives Heizen.

Alternativ oder zusätzlich kann es vorgesehen sein, dass das Heizen bewerkstelligt wird durch mechanischen Kontakt der Kontaktfläche der Heizeinheit mit der jeweiligen Schicht pulverförmigen Materials.

In jedem Fall kann das Übertragen und/oder Einbringen von Wärmemenge durch entsprechendes gesteuertes selektives Beaufschlagen eines mit dem Teilbereich der jeweiligen Schicht korrespondierenden Teilbereichs der Kontaktfläche der Heizeinheit mit Ultraschall, Infrarotstrahlung und/oder Mikrowellenstrahlung und/oder durch Aufprägen von Ultraschall, Infrarotstrahlung und/oder Mikrowellenstrahlung in den Teilbereich der Schicht.

Ein besonders hohes Maß an Steuerbarkeit und Reproduzierbarkeit mit einem entsprechend hohen Auflösungsvermögen lässt sich erreichen, indem zum Heizen und zur Ausbildung eines mit dem Teilbereich der jeweiligen Schicht pulverförmigen Materials korrespondierenden Teilbereichs der Kontaktfläche die Heizeinheit und/oder deren Kontaktfläche über eine Segmentierung, insbesondere in matrixartiger Form und/oder in Pixelform, steuerbar selektiv beheizt wird.

Zur Beschleunigung des Prozessierens und damit zur Verringerung der Verarbeitungszeit kann gemäß einer vorteilhaften Weiterbildung des erfindungsgemäßen Verfahrens ein gesteuert selektives Heizen vor dem Ausbilden eines mechanischen Kontakts der Kontaktfläche der Heizeinheit mit der zuletzt aufgebrachten Schicht pulverförmigen Materials und/oder während des Aufbringens einer Schicht pulverförmigen Materials begonnen werden. Somit wird die Totzeit, während der die Heizeinheit und die Kontaktfläche zum Prozessieren nicht zum Einsatz kommen können, zumindest zum Aufheizen der Heizeinheit und der Kontaktfläche in den entsprechenden Teilbereichen gewinnbringend genutzt.

Bei einer anderen vorteilhaften Ausgestaltungsform des erfindungsgemäßen Verfahrens kann ein besonders hohes Maß an Stabilität für die für das Erzeugnis herzustellende Struktur erreicht werden, wenn unmittelbar nach einem gesteuert selektiven Heizen und Aufschmelzen eines entsprechenden Teilbereichs einer jeweiligen Schicht pulverförmigen Materials zumindest ein mit dem entsprechenden Teilbereich der jeweiligen Schicht korrespondierender Teilbereich der Kontaktfläche und vorzugsweise die gesamte Kontaktfläche gekühlt wird, zumindest solange ein mechanischer Kontakt der Kontaktfläche zur zuletzt aufgebrachten und prozessierten Schicht besteht. Das bedeutet, dass das aufgeschmolzene und prozessierte Material nur so lange wie nötig im flüssigen oder plastischen Zustand gehalten und unmittelbar danach sofort durch Herunterkühlen verfestigt wird.

Zur weiteren thermischen Stabilisierung für eine ausgewogene Temperierung des herzustellenden Erzeugnisses werden bei einer weiteren Ausführungsform des erfindungsgemäßen Verfahrens die Prozessumgebung und/oder die Aufbaufläche temperiert und insbesondere beheizt.

Es kann zusätzlich von Vorteil sein, neben der thermischen Beeinflussung auch mechanische Aspekte beim Prozessieren, insbesondere bei der Formgebung des herzustellenden Erzeugnisses, zu berücksichtigen. Dazu ist bei einer anderen Ausgestaltungsform des erfindungsgemäßen Verfahrens in vorteilhafter Weise vorgesehen, dass der mechanische Kontakt zwischen der Kontaktfläche der Heizeinheit und einer jeweiligen Schicht pulverförmigen Materials unter Aufprägung eines mechanischen Drucks auf die Schicht pulverförmigen Materials hergestellt und/oder prozessiert wird, insbesondere während eines Heizvorgangs.

Die Erfindung betrifft ferner auch eine Vorrichtung zum schichtweisen pulverbasierten Herstellen eines Erzeugnisses, welche eingerichtet ist, das erfindungsgemäße Verfahren auszuführen oder bei einem derartigen Verfahren verwendet zu werden.

Bei einer konkreten Ausgestaltungsform der erfindungsgemäßen Vorrichtung ist diese ausgebildet mit
- einer Bauplattform mit einer Oberseite als Aufbaufläche und
- einem über eine Heizeinheit steuerbar selektiv heizbaren Druckkopf mit einer Unterseite als Kontaktfläche.

Dabei kann die Bauplattform eingerichtet sein, eine oder sukzessiv mehrere Schichten eines pulverförmigen Materials mittelbar oder unmittelbar auf der Aufbaufläche aufzunehmen.

Ferner kann die Heizeinheit eingerichtet sein, das pulverförmige Material zumindest eines vordefinierten Teilbereichs einer jeweils aufgebrachten Schicht von einer der Aufbaufläche abgewandten Seite unter - insbesondere mechanischem - Kontakt mit der Kontaktfläche der Heizeinheit und durch gesteuertes selektives Heizen der Kontaktfläche über die Heizeinheit simultan und vor dem Aufbringen gegebenenfalls weiterer vorgesehener Schichten pulverförmigen Materials aufzuschmelzen.

Bestimmte Oberflächeneigenschaften der Kontaktfläche der Heizeinheit sind für die Kontaktierung des Materials der Pulverschicht von Vorteil. So ist es bei einer vorteilhaften Ausgestaltungsform der erfindungsgemäßen Vorrichtung vorgesehen, dass die Kontaktfläche der Heizeinheit zum mechanischen, thermischen und/oder wärmeleitenden Kontakt mit einer jeweiligen Schicht pulverförmigen Materials eingerichtet ist und dazu insbesondere eine entsprechende Beschichtung mit einem Metall, einer Legierung und/oder einem Kunststoff (bspw. PTFE bzw. einer PTFE-Folie) aufweist. Auch deren Kombination ist denkbar.

Um das hohe Maß an Steuerbarkeit und Reproduzierbarkeit der jeweiligen Teilbereiche der zu Grunde liegenden Schichten pulverförmigen Materials zu gewährleisten ist es von besonderem Vorteil, wenn alternativ oder zusätzlich die Heizeinheit und/oder die Kontaktfläche der Heizeinheit zum Heizen und zur Ausbildung eines mit dem Teilbereich einer jeweiligen Schicht korrespondierenden Teilbereichs der Kontaktfläche eine Segmentierung mit einer Mehrzahl von Segmenten aufweisen, insbesondere in matrixartiger Form und/oder in Pixelform, wobei die Segmente der Segmentierung steuerbar selektiv beheizbar sind und insbesondere ein oder mehrere Heizelemente, Kühlelemente und/oder Kühlkanäle und/oder benachbart zueinander thermische oder thermomechanische Barrieren aufweisen. Die Kühlerelemente bzw. Kühlkanäle dienen dem auf ein Heizen folgenden (schnellen) Herunterkühlen und damit dem thermomechanischen Stabilisieren des Zwischenprodukts mit ein oder mehreren Materialschichten. Die thermischen oder thermomechanischen Barrieren dienen dazu, ein thermisches Übersprechen zwischen benachbarten Heizelementen der Heizeinheit und insbesondere der Kontaktfläche zu vermeiden, so dass auf diese Weise ein höherer Kontrast und ein höheres Auflösungsvermögen beim Prozessieren erzielbar sind.

In einer Ausführungsform können die Heizeinheit und insbesondere die Heizelemente eingerichtet sein, ein resistives Heizen, ein induktives Heizen und/oder ein Heizen durch Beaufschlagen mit Ultraschall, Infrarotstrahlung und/oder Mikrowellenstrahlung zu bewirken.

Denkbar sind Heizelemente in Form von Heizdrähten oder Heizwendeln oder auch in Form von Heizsonden mit einer heizenden Spitze, so dass die Kontaktfläche z.B. von einer Vielzahl von beheizbaren Spitzen gebildet wird.

Zur Ablaufsteuerung der erfindungsgemäßen Vorrichtung im Hinblick auf das erfindungsgemäße Herstellungsverfahren kann in vorteilhafter Weise eine Bewegungseinrichtung umfasst sein, durch welche die Bauplattform und der Druckkopf relativ zueinander steuerbar bewegbar sind.

Zur entsprechenden Ausgestaltung des thermischen Gesamtbudgets kann es von Vorteil sein, wenn die erfindungsgemäße Vorrichtung eine weitere Temperiereinrichtung umfasst, welche zum Temperieren der Bauplattform, der Aufbaufläche und/oder der Prozessumgebung eingerichtet ist und welche entsprechende Mittel zum Temperieren aufweist. Insbesondere kann die Aufbaufläche temperierbar ausgestaltet sein, um beheizt und/oder gekühlt zu werden.

Ferner ist es von Vorteil, wenn die erfindungsgemäße Vorrichtung eine Beschickungseinrichtung umfasst, welche zum Aufbringen des pulverförmigen Materials auf die Aufbaufläche eingerichtet ist.

Schließlich lässt sich das erfindungsgemäße Verfahren besonders leicht automatisieren und steuern, wenn die zu Grunde liegende Vorrichtung eine Steuereinheit umfasst, welche zum Steuern des Betriebs der Vorrichtung und insbesondere dazu eingerichtet ist, die Ausführung einer Ausführungsform des erfindungsgemäßen Verfahrens zum schichtweisen pulverbasierten Herstellen eines Erzeugnisses zu bewirken und zu steuern.

Das erfindungsgemäße Verfahren und die erfindungsgemäße Vorrichtung lassen sich besonders gewinnbringend im Zusammenhang mit pulverförmigen Werkstoffen einsetzen, welche im Allgemeinen mit herkömmlichen Verfahren und Vorrichtungen schwierig zu verarbeiten sind. Dabei kann es sich insbesondere um teilkristalline Werkstoffe und vorzugsweise um Hochleistungskunststoffe wie bspw. PEEK und dergleichen handeln. Hier sind beim herkömmlichen Vorgehen vor allem der Verzug sowie die Haftung in z-Richtung problematisch; diese Probleme werden erfindungsgemäß reduziert oder ganz umgangen.

In diesem Zusammenhang ist insbesondere eine geeignete Beschichtung an der Kontaktfläche oder Oberseite der Bauplattform und/oder an der Kontaktfläche oder Unterseite des Druckkopfes vorteilhaft. Eine mögliche Beschichtung wäre in diesem Zusammenhang beispielsweise auf der Grundlage von Teflon ausgebildet.

Zusätzlich oder alternativ kann das Vermeiden einer elektrostatischen Aufladung relevant sein, damit das Pulvermaterial nicht auf Grund elektrostatischer Effekte am Druckkopf anhaftet. Zu diesem Zwecke kann ein Ableiten von elektrischer Ladung vom Druckkopf vorgesehen sein.

Des Weiteren kann zusätzlich oder alternativ eine Art Abwischeffekt realisiert werden, um von der Kontaktfläche des Druckkopfes etwaig dennoch anhaftende Pulverpartikel zu entfernen. Dies könnte auch durch Anblasen der Kontaktfläche mittels Luft oder einem anderen, zum Beispiel inerten Gas erfolgen.

Weitere Einzelheiten, Vorteile und Merkmale der vorliegenden Erfindung ergeben sich aus nachfolgender Beschreibung von Ausführungsbeispielen anhand der Zeichnung.
- Figuren 1 bis 6: zeigen in schematischer und teilweise geschnittener Seitenansicht Zwischenzustände beim Einsatz einer erfindungsgemäßen Vorrichtung zum schichtweisen pulverbasierten Herstellen eines Erzeugnisses im Zusammenhang mit einer Ausführungsform des erfindungsgemäßen Verfahrens.
- Figuren 7 und 8: zeigen in schematischer und teilweise geschnittener Seitenansicht zwei verschiedene Endzustände für ein hergestelltes Erzeugnis, die bei einer Ausführungsform des erfindungsgemäßen Verfahrens erreicht werden.
- Figuren 9 und 10: zeigen in schematischer und teilweise geschnittener Ansicht von unten Details einer Heizeinheit im Zusammenhang mit einer Ausführungsform der erfindungsgemäßen Vorrichtung und deren Druckkopf.

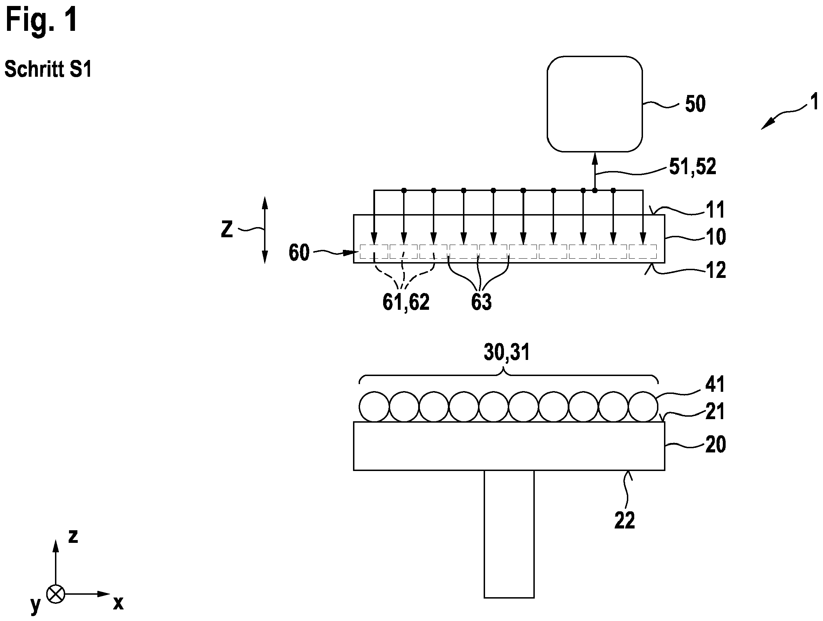

Nachfolgend werden unter Bezugnahme auf die Figuren 1 bis 10 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figuren 1 bis 6 zeigen in schematischer und teilweise geschnittener Seitenansicht Zwischenzustände beim Einsatz einer erfindungsgemäßen Vorrichtung 1 zum schichtweisen pulverbasierten Herstellen eines Erzeugnisses 45 im Zusammenhang mit einer Ausführungsform des erfindungsgemäßen Verfahrens.

Bei der in den Figuren 1 bis 6 dargestellten Ausführungsform der erfindungsgemäßen Vorrichtung 1 stehen sich eine Bauplattform 20 mit ihrer Oberseite, welche als Kontaktseite, Kontaktfläche oder Aufbaufläche 21 fungiert, und ein beheizbarer Druckkopf 10 mit einer Unterseite, die als Kontaktseite, Kontaktfläche oder Druckfläche 12 fungiert, diametral und in der Figur 1 zueinander beabstandet gegenüber, so dass die Unterseite oder Rückseite 22 der Bauplattform 20 einerseits und die Oberseite 11 des Druckkopfes 10 andererseits voneinander abgewandt sind.

Der Druckkopf 10 weist in seinem Inneren eine Heizeinheit 60 mit einer Mehrzahl von Heizelementen 62 auf, die nach Art von Segmenten 61 zueinander beabstandet angeordnet sind. Über eine Steuereinheit 50 und entsprechende Steuer- und/oder Erfassungsleitungen 51 und Versorgungsleitungen 52 können die einzelnen Heizelemente 62 und mithin die Segmente 61 der Heizeinheit 60 selektiv zum Heizen angesteuert werden. Alternativ oder zusätzlich kann neben einem Heizvorgang auch ein Kühlvorgang realisiert werden. Um ein thermisches Übersprechen zwischen benachbarten Segmenten 61 oder Heizelementen 62 zu verhindern, sind in der Ausführungsform der Vorrichtung 1 gemäß den Figuren 1 bis 6 zwischen benachbarten Segmenten 61 oder Heizelementen 62 thermische oder thermomechanische Barrieren 63 ausgebildet. Diese Barrieren 63 können beispielsweise als in den Zwischenräumen zwischen den Segmenten 61 oder Heizelementen 62 verlaufende, mit einem Kühlmedium beschickte oder beschickbare Kühlkanäle 65 ausgebildet sein. Alternativ können die Barrieren 63 auch aus einem Material mit geringer Wärmeleitfähigkeit ausgebildet sind.

Über eine hier nicht dargestellte Bewegungseinrichtung können der Druckkopf 10 und die Bauplattform 20 in der z-Richtung relativ zueinander bewegt und somit einander angenähert und voneinander separiert werden. Insbesondere ist der Druckkopf 10 mit seiner Unterseite 12 als Kontaktfläche in Bezug auf die Oberseite 21 als Aufbaufläche der Bauplattform 20 annäherbar, insbesondere durch lineare Verschiebung.

Denkbar ist auch eine laterale Bewegung, zumindest in leichter Form, in der xy-Ebene oder eine Bewegung mit Verkippung der Flächen 12 und 21 zueinander, um ein fertiggestelltes Erzeugnis 45 von den Flächen 12, 21 zu lösen.

In der in Figur 1 dargestellten Situation mit dem Zwischenschritt S1 ist bereits eine erste Schicht 31 des pulverförmigen Materials 30 mit Pulverteilchen 41 in loser Form auf die Oberseite 21 der Bauplattform 20 als Aufbaufläche aufgebracht.

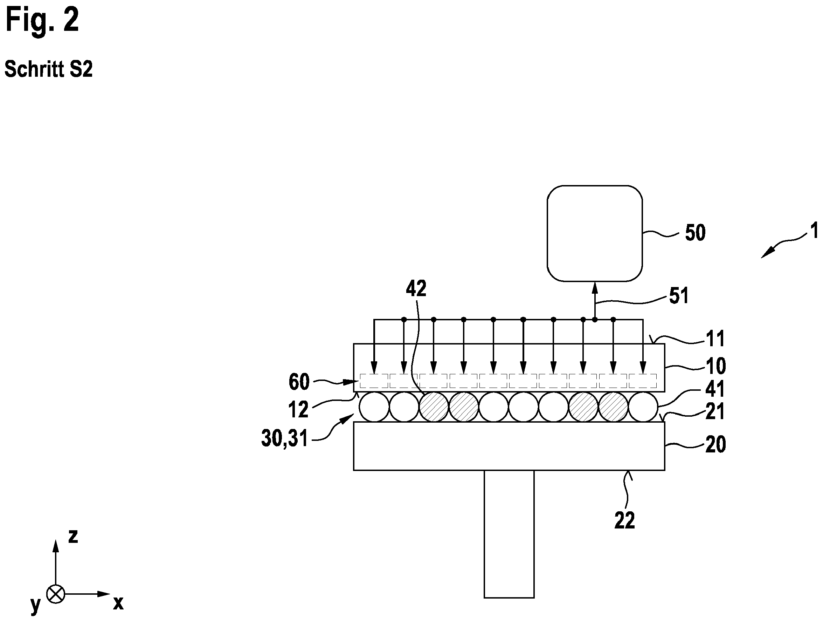

Im Übergang zu dem in Figur 2 dargestellten Zwischenschritt S2 wird der Druckkopf 10 mit seiner Unterseite 12 an die Bauplattform 20 angenähert, bis die Unterseite oder Kontaktfläche 12 des Druckkopfes 10 die erste Schicht 31 des pulverförmigen Materials 30 berührt. Durch Aufheizen der Kontaktfläche 12 des Druckkopfes 10 mittels der Heizeinheit 60 in selektiver Form, nämlich durch entsprechende Auswahl einzelner Heizelemente 62 als Segmente 61 der Heizeinheit 60 werden bestimmte Bereiche 42 oder Pulverteilchen 42 des pulverförmigen Materials 30 aufgeschmolzen und verbunden.

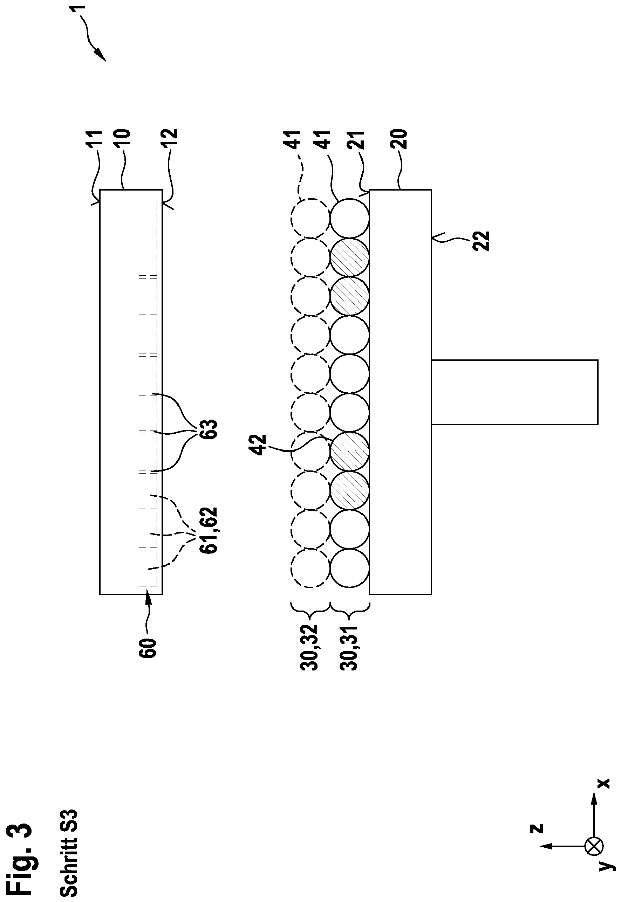

Im Übergang zu dem in Figur 3 dargestellten Zwischenschritt S3 wird zunächst der Druckkopf 10 von der prozessierten ersten Schicht 31 pulverförmigen Materials 30 durch Verschieben/Anheben in der z-Richtung entfernt. Nachfolgend wird eine zweite Schicht 32 pulverförmigen Materials 30 mit entsprechenden Pulverteilchen 41 auf die erste prozessierte Schicht 31 aufgebracht.

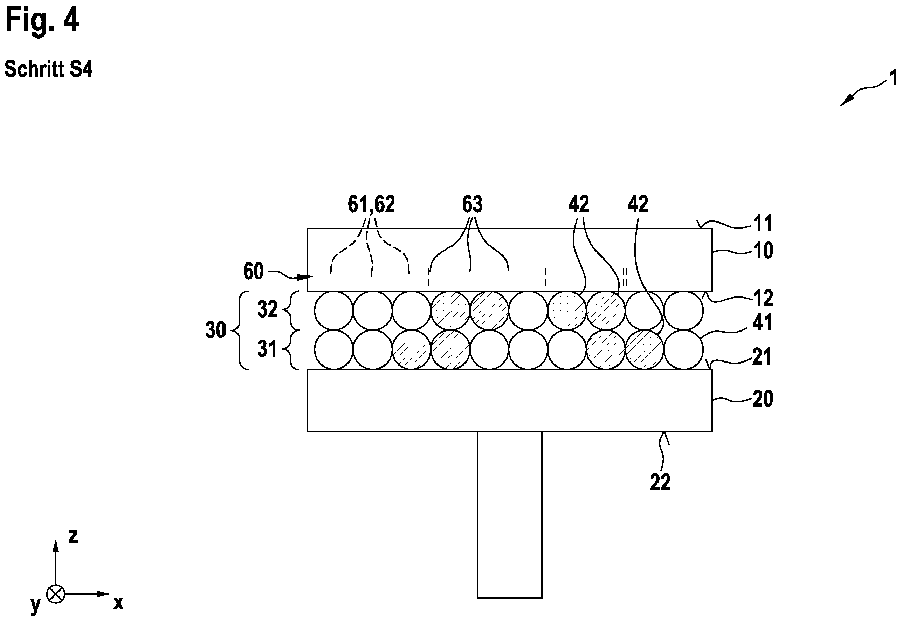

Im Übergang zu dem in Figur 4 dargestellten Zwischenschritt S4 wird dann der Druckkopf 10 unter selektiver Beheizung der Kontaktfläche 12 mittels der Heizeinheit 60 und den als Segmente 61 fungierenden Heizelementen 62 die zweite Schicht 32 pulverförmigen Materials 30 prozessiert, wobei wiederum ein Teil der Pulverteilchen 41 in aufgeschmolzene Pulverteilchen oder -bereiche 42 umgewandelt wird.

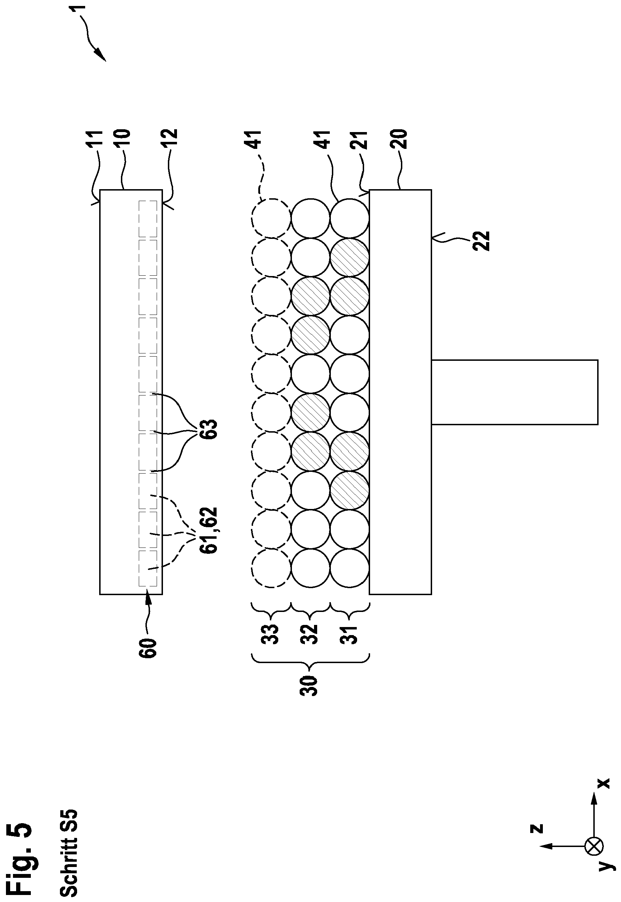

Gemäß Figur 5 und dem dort dargestellten Zwischenschritt S5 wird dieser Vorgang wiederholt. Das bedeutet, dass auf die zuvor prozessierte Struktur mit der ersten und der zweiten Schicht 31 und 32 pulverförmigen Materials 30 eine weitere Schicht 33 pulverförmigen Materials 30 aufgebracht wird.

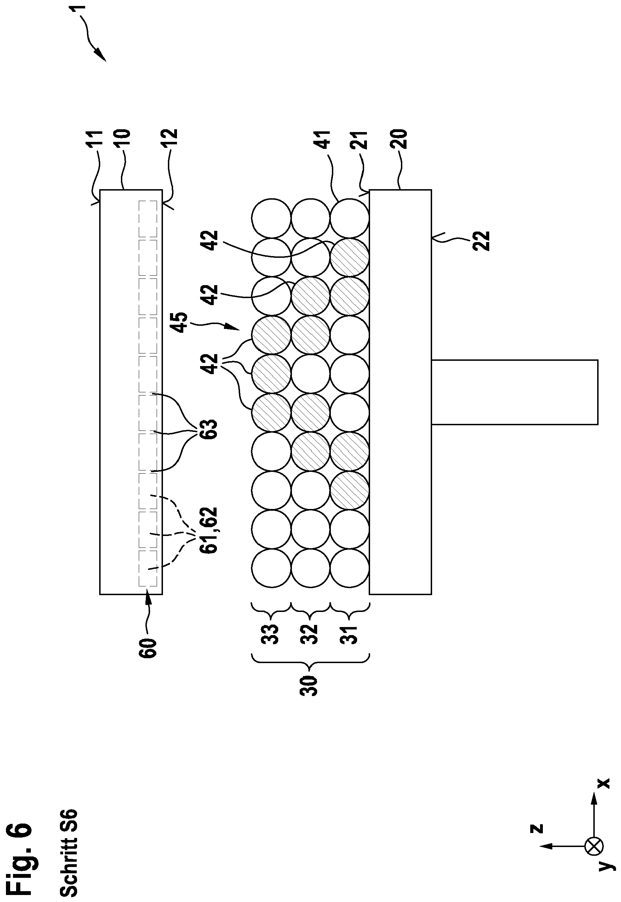

Im Übergang zu dem in Figur 6 dargestellten Zwischenschritt S6 ist auch die dritte Schicht 33 pulverförmigen Materials 30 in entsprechenden Teilbereichen, in denen aufgeschmolzene Bereiche oder aufgeschmolzene Pulverteilchen 42 aus den losen Pulverteilchen 41 gebildet werden, aufgeschmolzen und somit prozessiert.

Die in Figur 6 dargestellte Struktur aus den zusammenhängenden aufgeschmolzenen und verschmolzenen Teilbereichen oder Pulverteilchen 42 stellt quasi die Endform des Erzeugnisses 45 dar.

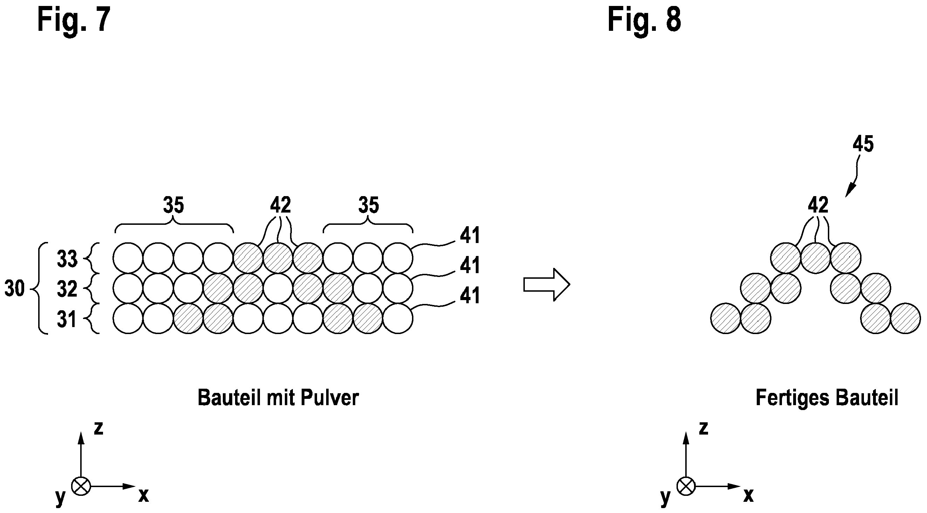

Die Figuren 7 und 8 zeigen in schematischer und teilweise geschnittener Seitenansicht zwei verschiedene Endzustände für ein hergestelltes Erzeugnis 45, die bei einer Ausführungsform des erfindungsgemäßen Verfahrens erreicht werden.

Ausgehend von der in Figur 7 gezeigten Struktur mit der eigentlichen Endform des Erzeugnisses 45 wird gezeigt wie die noch lose vorhandenen Pulverteilchen 41 des pulverförmigen Materials 30 aus der zusammenhängenden Struktur der verschmolzenen Teilbereiche oder Pulverteilchen 42 entfernt werden und so die freie Form des Erzeugnisses 45 gemäß Figur 8 entsteht.

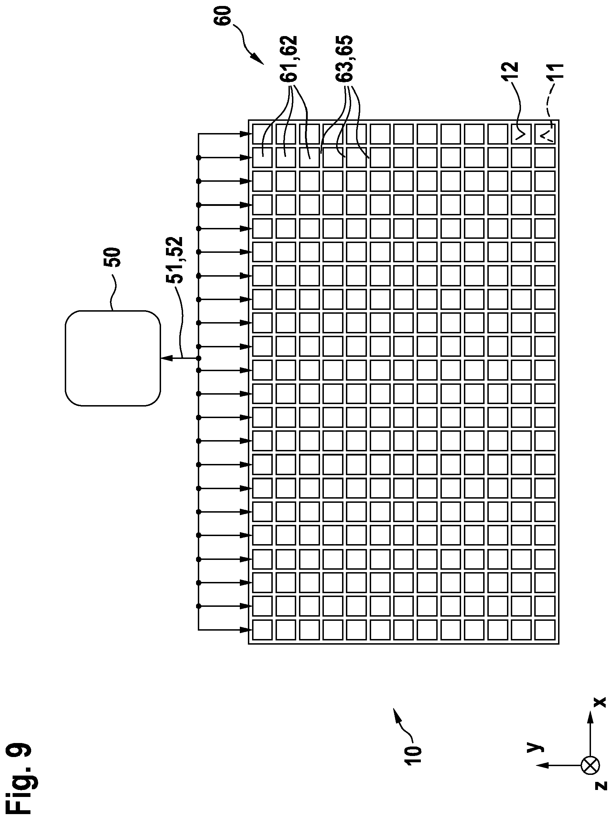

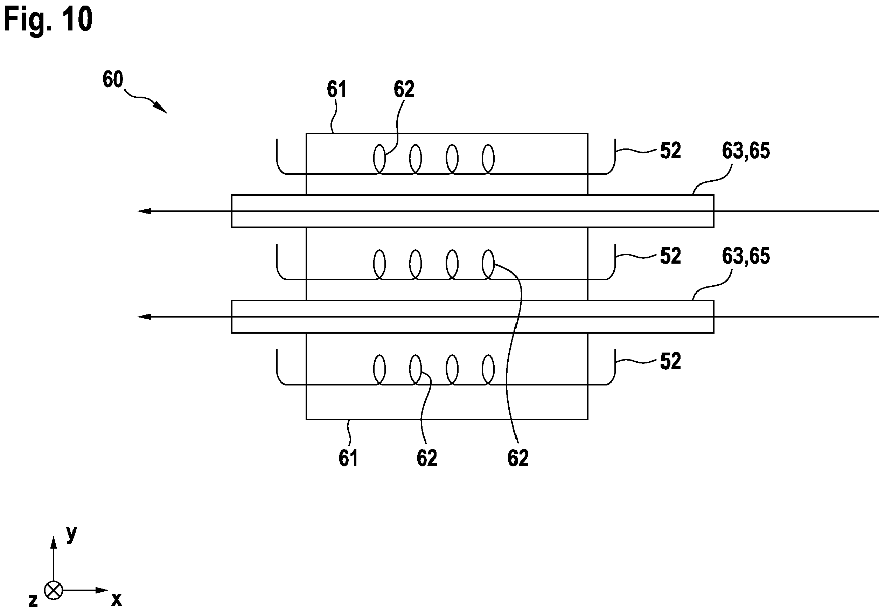

Die Figuren 9 und 10 zeigen in schematischer und teilweise geschnittener Ansicht von unten Details einer Heizeinheit 60 im Zusammenhang mit einer Ausführungsform der erfindungsgemäßen Vorrichtung 1 und deren Druckkopf 10.

Die in Figur 9 dargestellte Heizeinheit 60 besteht aus einer rechteckigen und matrixartigen Anordnung von Segmenten 61, die von voneinander separierten Heizelementen 62 gebildet werden. Die Heizelemente 62 sind über die Steuer- und/oder Erfassungsleitungen 51 und die Versorgungsleitungen 52 einzeln und in beliebiger Kombination miteinander zum Heizen (und gegebenenfalls auch zum Kühlen) ansteuerbar und mit Energie versorgbar.

Die Steuerung der Heizeinheit 60 erfolgt durch die über die Steuer- und/oder Erfassungsleitungen 51 und die Versorgungsleitungen 52 mit der Heizeinheit 60 wirkverbundene Steuereinheit 50. Die zueinander direkt benachbarten Heizelemente 62 oder Segmente 61 können durch eine thermische oder thermomechanische Barriere 63 und/oder durch entsprechende Kühlkanäle 65 voneinander getrennt sein, wobei beim Vorsehen von Kühlkanälen 65 die Möglichkeit besteht, direkt nach einem Aufheizen und Aufschmelzen einen Kühlvorgang auszuüben.

Figur 10 zeigt detaillierter eine Konkretisierung für die Heizelemente 62 in einem Segment 61 als Heizwendel oder Heizdraht, welche/r über die Versorgungsleitung 52 mit elektrischer Energie gesteuert versorgt wird. Die dargestellten Kühlkanäle 65 fungieren gleichzeitig als thermische Barriere, um so den thermischen Kontrast und das thermische Auflösungsvermögen der Anordnung von Heizelementen 62 und Segmenten 61 der Heizeinheit 60 im Betrieb zu gewährleisten.

Diese und weitere Aspekte der vorliegenden Erfindung werden auch anhand der folgenden Darstellung weiter erläutert:
Die vorliegende Erfindung betrifft insbesondere auch ein neuartiges Druckverfahren und zum Beispiel auch ein Druckverfahren vom Layer-Fusing-Typ (LFF).

### Herkömmliches Vorgehen

Es gibt eine Vielzahl unterschiedlicher dreidimensionaler oder 3D-Druckverfahren. Diese Verfahren können zum Beispiel in flüssigkeitsbasierte, pulverbasierte und schmelzebasierte unterteilt werden.

Pulverbasierte Verfahren nutzen herkömmlicherweise zum Beispiel eine Lasereinheit zum Beispiel mit einem CO₂-Laser, einem Diodenlaser oder dergleichen zum Aufschmelzen des Pulvers (Metall oder Kunststoff). Die Laserstrahlen fahren dabei die Kontur der jeweiligen Schicht ab bis die gesamte Fläche der jeweiligen Schicht erfasst wurde. Ein großer Nachteil ist es, dass eine Schicht nicht in einem Schritt aufgeschmolzen werden kann.

Dies ist beispielsweise bei dem Digital Light Processing Verfahren möglich. Hier wird mit einem DMD-Chip eine komplette Schicht mit UV-Strahlung auf flüssiges Harz projiziert, die daraufhin aushärtet. In diesem Verfahren sind jedoch keine Metalle oder Thermoplaste verarbeitbar.

Die folgende Erfindung beschreibt ein 3D-Druck-Verfahren, dass es ermöglichen soll, in einem Schritt eine komplette Pulverschicht aufzuschmelzen.

### Erfindungsgemäßes Vorgehen

Durch das erfindungsgemäße Konzept werden pulverbasierte Verfahren verbessert. Auf der Grundfläche einer Bauplattform wird zum Beispiel eine erste definierte Pulverschicht aufgetragen und dann lokal und selektiv ausgehärtet. Das lokale und selektive Aushärten des Materials der Pulverschicht erfolgt jedoch nicht über Beaufschlagung mit Strahlung aus einem Laser, sondern über einen neuartigen Druckkopf, der in direkten mechanischen Kontakt mit dem Pulvermaterial tritt, wie dies im Zusammenhang mit den Figuren 1 bis 6 gezeigt ist.

In dem in Figur 1 gezeigten Schritt S1 wird die Bauplattform mit einer ersten Pulverschicht 31 definierter Dicke bedeckt. Der Druckkopf 10 fährt auf direkten mechanischen Kontakt und gegebenenfalls sogar unter leichtem Druck an das Pulver 30 der ersten Schicht 31 heran. Durch lokales und selektives Aufheizen des Kopfes 10, insbesondere an dessen Unterseite als Druckfläche oder Kontaktfläche 12, wird das Pulvermaterial 30 ebenfalls lokal und selektiv ge- und/oder verschmolzen. Anschließend fährt der Druckkopf 10 nach oben. Dann wird eine neue und zweite Pulverschicht 32 aufgetragen und der Druckkopf 10 fährt erneut zum Aufheizen und Verschmelzen in direkten mechanischen Kontakt an die neu aufgetragene zweite Pulverschicht 32 heran. Dieser Vorgang wiederholt sich solange, bis das Bauteil 45 aus einer Mehrzahl miteinander verbundener Schichten 31, 32, 33 bzw. Teilbereichen davon komplett erstellt ist.

Während sich der Druckkopf 10 oberhalb des Pulvers 30 befindet, kann er bereits aufgeheizt werden, zum Beispiel solange auf die Bauplattform 20 neues Pulver 30 aufgebracht wird. Anschließend reicht ein kurzer Kontakt mit dem Pulver 30, um das lokale Aufschmelzen zu bewirken.

Es können vergleichsweise kurze Zykluszeiten realisiert werden. Somit stellen sich vergleichsweise hohe Baugeschwindigkeiten ein.

Damit das Verfahren realisiert werden kann, muss der Druckkopf 10 so ausgelegt sein, dass beim Hochfahren nach dem Aushärten einer Schicht 31, 32, 33, keine Pulverteilchen 41, 42 oder ausgehärtete Bauteilstücke am Druckkopf 10 verbleiben. Dies wird über Beschichtungen, bestimmte Legierungen, einem Überzug mit einer PTFE-Folie oder dergleichen an der Kontaktfläche 12 des Druckkopfes 10 erreicht.

Das Ablösen des fertigen Bauteils 45 von der Bauplattform 20, die auch als Druckplattform 20 bezeichnet wird, kann auch durch eine laterale und/oder drehende Relativbewegung von Bauplattform 20 und Druckkopf 10 zum Beispiel nach dem Verschmelzen einer Schicht 31, 32, 33, aber vor dem Hochfahren des Druckkopfes 10, unterstützt werden.

Auch ist ein Kipp- und/oder Tiltingmechanismus denkbar. Durch den Einsatz eines derartigen Mechanismus kippt der Druckkopf 10 auf einer Seite nach oben, anschließend wird die andere Seite langsam nachgezogen.

Damit der Druckkopf 10 auch in den lateralen Richtungen, also in den Figuren in der xy-Ebene, lokal Pulver 30 aufschmelzen kann, muss er aus verschiedenen Zonen oder Segmenten 61 mit entsprechenden Heizelementen 62 bestehen.

Der Druckkopf 10 besteht zum Beispiel aus einzeln ansteuerbaren Heizelementen 62, vergleichbar mit einzelnen Pixeln. Die Heizelemente 62 können jeweils mittels Hitzebarrieren 63 räumlich und/oder thermisch voneinander getrennt ausgebildet sein, damit durch ein gegebenes Heizelement 62 keine Beeinflussung auf benachbarte Heizelemente 62 ausgeübt wird. So wird erreicht, dass ausschließlich das Pulvermaterial 30, also zum Beispiel ein Kunststoffmaterial, in einem einem jeweiligen Heizelement 62 zugeordneten Flächenbereich oder Raumbereich, also im angesteuerten Bereich, aufschmilzt.

Die Heizelemente 62 können aus Metall, Kunststoff, Keramik oder Verbundwerkstoffen bestehen.

Die Heizwirkung kann durch Widerstandsheizung, Induktion, Ultraschall hervorgerufen werden.

Der Druckkopf 10 kann so entwickelt sein, dass ein sehr schnelles Aufheizen der jeweiligen Heizelemente 62 sowie ein sehr schnelles Abkühlen der jeweiligen Heizelemente 62 nach einem Aufheizen bewirkt wird. Dies kann durch integrierte Kühlkanäle 65 erreicht werden.

Die einzelnen Heizelemente 62 und mithin die Segmentierung des Druckkopfes 10 weisen vorzugsweise Größen im Bereich von wenigen Mikrometern bis hin zu mehreren Zentimetern auf. Abhängig von der Skalierung sind aber auch andere Größen vorstellbar.

Durch Verzicht auf das Verwenden eines Lasers und die damit einhergehende vergleichsweise komplizierte Prozessführung, kann das erfindungsgemäße Verfahren beliebig groß skaliert werden. Es ist denkbar, Druckköpfe 10 mit mehreren Metern Durchmesser in der Grundfläche zu realisieren. Der Pulverauftrag in dieser Größe stellt dabei kein Problem dar. So ist es möglich, dass erfindungsgemäß auch sehr große Bauteile additiv angefertigt werden können, zum Beispiel bis hin zu einer vollständigen Einrichtung, zum Beispiel der vollständigen Karosserie eines Fahrzeugs oder des Gehäuses einer Maschine.

Weiterhin ist es möglich, den kompletten Bauraum, in dem sich Bauplattform 20, Pulver 30 und Druckkopf 10 befinden, beheizbar auszugestalten, so dass nur noch ein minimaler Eintrag von Energie über den Druckkopf 10 gewährleistet werden muss, um das Pulver 30 lokal zu verschmelzen.

Auch kann eine Temperierung der Bauplattform 20 von Vorteil sein, um die Haftung des hergestellten Bauteils 45 oder einer Bauteilzwischenform an der Bauplattform 20 zu verbessern.

Des Weiteren kann eine Verbesserung der Haftung an der Bauplattform 20 durch den Einsatz von speziellen Materialien, Haftvermittlern, durch formschlüssige Geometrien, elektrostatische Kräfte, Vakuumspanntechnik oder dergleichen sichergestellt werden.

Die Auslegung des Druckkopfes 10 sowie die Ansteuerung können auf unterschiedliche Weisen erfolgen. Beispielsweise durch die Verwendung stromdurchflossener Heizspulen, welche als Heizelemente 62 fungieren.

So können die Heizelemente 62 von dünnen Heizspulen durchzogen sein, um ein schnelles Erhitzen zu ermöglichen. Gleichzeitig können Kühlkanäle 65 vorgesehen sein, um ein schnelles Abkühlen zu bewirken.

Die Verwendung anderer Techniken wie Induktion, Ultraschallwellen, Mikrowellen oder dergleichen können die Größe der Bauform verringern. Auch die Kombination unterschiedlicher Werkstoffe kann entscheidend sein.

Denkbar ist auch eine Auslegung der einzelnen Heizelemente 62 jeweils nach Art einer Drahtspitze, zum Beispiel unter Verwendung eines Wolframdrahts wie bei der Wendel in einer Glühbirne. So können Temperaturen von bis zu 3000 °C erreicht werden. Eine derartige Drahtspitze könnte direkt ein jeweiliges Pulverteilchen 41 berühren und dieses aufschmelzen, damit es verläuft. Die Drähte können als Heizelemente 62 in vorteilhafterweise einzeln ansteuerbar ausgebildet sein.

Neben der vorstehenden schriftlichen Beschreibung der Erfindung wird zu deren ergänzender Offenbarung hiermit explizit auf die zeichnerische Darstellung der Erfindung in den Figuren 1 bis 10 Bezug genommen.

### Bezugszeichenliste

- 1: Vorrichtung

- 10: (beheizbarer) Druckkopf
- 11: Oberseite
- 12: Unterseite, Kontaktseite oder-fläche, Druckfläche

- 20: Bauplattform
- 21: Oberseite, Kontaktseite oder -fläche, Aufbaufläche
- 22: Unterseite

- 30: Pulvermaterial
- 31: erste Schicht Pulvermaterial
- 32: zweite Schicht Pulvermaterial
- 33: dritte Schicht Pulvermaterial
- 35: überschüssiges Pulvermaterial

- 41: loser und unverschmolzener Bereich, loses und unverschmolzenes Pulverteilchen
- 42: verschmolzener Bereich, verschmolzenes Pulverteilchen
- 45: Erzeugnis, Produkt

- 50: Steuereinheit, Steuereinrichtung
- 51: Steuer- und/oder Erfassungsleitung
- 52: Versorgungsleitung

- 60: Heizeinheit
- 61: Segment
- 62: Heizelement
- 63: Barriere
- 65: Kühlelement, Kühlkanal

- x: Raumrichtung
- y: Raumrichtung
- z: Raumrichtung

## Patentansprüche

1. Verfahren zum schichtweisen pulverbasierten Herstellen eines Erzeugnisses (45), bei welchem:
- eine oder sukzessiv mehrere Schichten (31, 32, 33) eines pulverförmigen Materials (30) mittelbar oder unmittelbar auf eine Aufbaufläche (21) aufgebracht werden und
- das pulverförmige Material zumindest eines vordefinierten Teilbereichs einer jeweils aufgebrachten Schicht (31, 32, 33) von einer der Aufbaufläche (21) abgewandten Seite unter - insbesondere mechanischem - Kontakt mit einer Kontaktfläche (12) einer Heizeinheit (60) und durch gesteuertes selektives Heizen der Kontaktfläche (12) über die Heizeinheit (60) simultan und vor dem Aufbringen gegebenenfalls weiterer vorgesehener Schichten (32, 33) pulverförmigen Materials (30) aufgeschmolzen wird.

2. Verfahren nach Anspruch 1, mit den Schritten:
- Bereitstellen der Aufbaufläche (21),
- Aufbringen einer ersten Schicht (31) des pulverförmigen Materials (30) direkt und unmittelbar auf die Aufbaufläche (21),
- Heranführen der Heizeinheit (60) an die erste Schicht (31) von der der Aufbaufläche (21) abgewandten Seite bis zum - insbesondere mechanischen - Kontakt der ersten Schicht (31) mit der Kontaktfläche (12) der Heizeinheit (60) und
- gesteuertes selektives Heizen der Heizeinheit (60) gemäß dem in Bezug auf die erste Schicht (31) vordefinierten korrespondierenden Teilbereich der ersten Schicht (31) und dadurch gesteuertes und selektives Aufschmelzen des pulverförmigen Materials (30) der ersten Schicht (31) in dem jeweiligen Teilbereich.

3. Verfahren nach Anspruch 2, mit den weiteren Schritten:
- Aufbringen einer weiteren Schicht (32, 33) des pulverförmigen Materials (30) direkt und unmittelbar auf eine zuletzt aufgebrachte und in Teilbereichen aufgeschmolzene Schicht (31, 32),
- Heranführen der Heizeinheit (60) an die weitere Schicht (32, 33) von der der Aufbaufläche (21) abgewandten Seite bis zum - insbesondere mechanischen - Kontakt der weiteren Schicht (32, 33) mit der Kontaktfläche (12) der Heizeinheit (60) und
- gesteuertes selektives Heizen der Heizeinheit (60) gemäß dem in Bezug auf die weitere Schicht (32, 33) vordefinierten korrespondierenden Teilbereich der weiteren Schicht (32, 33) und dadurch gesteuertes und selektives Aufschmelzen des pulverförmigen Materials (30) der weiteren Schicht (32, 33) in dem jeweiligen Teilbereich.

4. Verfahren nach einem der vorangehenden Ansprüche, bei welchem das Heizen erfolgt durch mechanischen, thermischen und/oder wärmeleitenden Kontakt der Kontaktfläche (12) mit der jeweiligen Schicht (31, 20, 33) und
- durch entsprechendes gesteuertes selektives Temperieren eines mit dem Teilbereich der jeweiligen Schicht (31, 32, 33) korrespondierenden Teilbereichs der Kontaktfläche (12), insbesondere durch resistives und/oder induktives Heizen, und/oder
- durch entsprechendes gesteuertes selektives Beaufschlagen eines mit dem Teilbereich der jeweiligen Schicht (31, 32, 33) korrespondierenden Teilbereichs der Kontaktfläche (12) mit Ultraschall, Infrarotstrahlung und/oder Mikrowellenstrahlung und/oder durch Aufprägen von Ultraschall, Infrarotstrahlung und/oder Mikrowellenstrahlung in den Teilbereich der Schicht (31, 32, 33).

5. Verfahren nach einem der vorangehenden Ansprüche,
bei welchem zum Heizen und zur Ausbildung eines mit dem Teilbereich der jeweiligen Schicht (31, 32, 33) korrespondierenden Teilbereichs der Kontaktfläche (12) die Heizeinheit und/oder deren Kontaktfläche (12) über eine Segmentierung, insbesondere in matrixartiger Form und/oder in Pixelform, steuerbar selektiv beheizt wird.

6. Verfahren nach einem der vorangehenden Ansprüche,
bei welchem ein gesteuert selektives Heizen vor dem Ausbilden eines mechanischen Kontakts der Kontaktfläche (12) der Heizeinheit (60) mit der zuletzt aufgebrachten Schicht (31, 32, 33) und/oder während des Aufbringens einer Schicht (31, 32, 33) begonnen wird.

7. Verfahren nach einem der vorangehenden Ansprüche,
bei welchem unmittelbar nach einem gesteuert selektiven Heizen und Aufschmelzen eines entsprechenden Teilbereichs einer jeweiligen Schicht (31, 32, 33) zumindest ein mit dem entsprechenden Teilbereich der jeweiligen Schicht (31, 32, 33) korrespondierender Teilbereich der Kontaktfläche (12) und vorzugsweise die gesamte Kontaktfläche (12) gekühlt wird, zumindest solange ein mechanischer Kontakt der Kontaktfläche (12) zur zuletzt aufgebrachten Schicht (31, 32, 33) besteht.

8. Verfahren nach einem der vorangehenden Ansprüche,
bei welchem für eine ausgewogene Temperierung des herzustellenden Erzeugnisses (45) die Prozessumgebung und/oder die Aufbaufläche (21) temperiert und insbesondere beheizt werden.

9. Verfahren nach einem der vorangehenden Ansprüche,
bei welchem der mechanische Kontakt zwischen der Kontaktfläche (12) und einer jeweiligen Schicht (31, 32, 33) unter Aufprägung eines mechanischen Drucks auf die Schicht (31, 32, 33) hergestellt wird, insbesondere während eines Heizvorgangs.

10. Vorrichtung (1) zum schichtweisen pulverbasierten Herstellen eines Erzeugnisses (45), welche eingerichtet ist, ein Verfahren nach einem der Ansprüche 1 bis 9 auszuführen oder bei einem derartigen Verfahren verwendet zu werden.

11. Vorrichtung (1) nach Anspruch 10,
welche ausgebildet ist mit
- einer Bauplattform (20) mit einer Oberseite als Aufbaufläche (21) und
- einem über eine Heizeinheit (60) steuerbar selektiv heizbaren Druckkopf (10) mit einer Unterseite als Kontaktfläche (12),
wobei
- die Bauplattform (20) eingerichtet ist, eine oder sukzessiv mehrere Schichten (31, 32, 33) eines pulverförmigen Materials (30) mittelbar oder unmittelbar auf der Aufbaufläche (21) aufzunehmen, und
- die Heizeinheit (60) eingerichtet ist, das pulverförmige Material zumindest eines vordefinierten Teilbereichs einer jeweils aufgebrachten Schicht (31, 32, 33) von einer der Aufbaufläche (21) abgewandten Seite unter - insbesondere mechanischem - Kontakt mit der Kontaktfläche (12) der Heizeinheit (60) und durch gesteuertes selektives Heizen der Kontaktfläche (12) über die Heizeinheit (60) simultan und vor dem Aufbringen gegebenenfalls weiterer vorgesehener Schichten (32, 33) pulverförmigen Materials (30) aufzuschmelzen.

12. Vorrichtung (1) nach Anspruch 10 oder 11, bei welcher
- die Kontaktfläche (12) zum mechanischen, thermischen und/oder wärmeleitenden Kontakt mit einer jeweiligen Schicht (31, 32, 33) eingerichtet ist und dazu insbesondere eine entsprechende Beschichtung mit einem Metall, einer Legierung und/oder einem Kunststoff (beispielsweise einer PTFE-Folie) aufweist und/oder
- die Heizeinheit (60) und/oder die Kontaktfläche (12) zum Heizen und zur Ausbildung eines mit dem Teilbereich einer jeweiligen Schicht (31, 32, 33) korrespondierenden Teilbereichs der Kontaktfläche (12) eine Segmentierung mit einer Mehrzahl von Segmenten (61) aufweisen, insbesondere in matrixartiger Form und/oder in Pixelform, wobei die Segmente (61) der Segmentierung steuerbar selektiv beheizbar sind und insbesondere ein oder mehrere Heizelemente (62), Kühlelemente und/oder Kühlkanäle (62) und/oder benachbart zueinander thermische oder thermomechanische Barrieren (63) aufweisen,
- wobei die Heizeinheit (60) und insbesondere die Heizelemente (62) eingerichtet sind, ein resistives Heizen, ein induktives Heizen und/oder ein Heizen durch Beaufschlagen mit Ultraschall, Infrarotstrahlung und/oder Mikrowellenstrahlung zu bewirken.

13. Vorrichtung (1) nach einem der Ansprüche 10 bis 12, welche des Weiteren
- eine Bewegungseinrichtung umfasst, durch welche die Bauplattform (20) und der Druckkopf (10) relativ zueinander steuerbar bewegbar sind,
- eine weitere Temperiereinrichtung umfasst, welche zum Temperieren der Bauplattform (20), der Aufbaufläche (21) und/oder der Prozessumgebung eingerichtet ist, und/oder
- eine Beschickungseinrichtung umfasst, welche zum Aufbringen des pulverförmigen Materials (30) auf die Aufbaufläche (21) eingerichtet ist.

14. Vorrichtung (1) nach einem der Ansprüche 10 bis 13, welche des Weiteren eine Steuereinheit (50) umfasst, welche zum Steuern des Betriebs der Vorrichtung (1) und insbesondere dazu eingerichtet ist, die Ausführung eines Verfahrens nach einem der Ansprüche 1 bis 9 zu bewirken.
